# EUROPÄISCHE PATENTSCHRIFT

(11) **EP 3 294 592 B1**
(45) Veröffentlichungstag und Bekanntmachung des Hinweises auf die Patenterteilung: **11.09.2019**
(21) Anmeldenummer: 16721361.0
(22) Anmeldetag: 04.05.2016
(51) Int. Cl.: B60R 21/205

(54) **GASSACKMODUL SOWIE BAUGRUPPE**
AIRBAG MODULE AND ASSEMBLY
MODULE AIRBAG ET ENSEMBLE

(30) Priorität: 09.05.2015 DE 102015006128
(43) Veröffentlichungstag der Anmeldung: 21.03.2018
(73) Patentinhaber: TRW Automotive GmbH, 73553 Alfdorf (DE)
(72) Erfinder: SCHMID, Juergen, 73568 Durlangen (DE)
(74) Vertreter: ZF TRW Patentabteilung
(86) Internationale Anmeldenummer: PCT/EP2016/000735
(87) Internationale Veröffentlichungsnummer: WO 2016/180523

(56) Entgegenhaltungen:
- DE-A1- 19 704 680
- DE-U1-202013 011 881
- US-A1- 2006 220 355

## Beschreibung

Die Erfindung betrifft ein Gassack-Modul zur Anbringung an einer Instrumententafel sowie eine Baugruppe bestehend aus einer Instrumententafel und einem Gassack-Modul.

Aus dem Stand der Technik sind Gassack-Module bekannt, die direkt an einer Instrumententafel eines Kraftfahrzeugs angebracht werden. Ein solches Gassack Modul wird in der gattungsgemäßen Offenbarung DE19704680 A1 beschrieben. Diese Gassack-Module weisen üblicherweise ein massives Gehäuse auf, in dem zumindest ein Gassack im gefalteten Zustand angeordnet ist. Das massive Gehäuse bildet einen Befestigungsabschnitt aus, über den das Gassack-Modul an der Instrumententafel angebracht werden kann. Am massiven Gehäuse ist ferner ein Gasgenerator fixiert, welcher den gefalteten Gassack im Auslösefall mit einem Druckgas beaufschlagt, sodass sich dieser entfaltet und einen Fahrzeuginsassen bei einem Verkehrsunfall schützt.

Als nachteilig hat sich bei diesen aus dem Stand der Technik bekannten Gassack-Modulen herausgestellt, dass sie aufgrund des massiven Gehäuses ein hohes Gewicht aufweisen.

Um das Problem des hohen Gewichts zu lösen, sind aus dem Stand der Technik auch Gassack-Module bekannt, die ein Gehäuse haben, welches aus einem Gewebematerial ausgebildet ist. Diese Gassack-Module haben aufgrund des Gewebematerials ein geringeres Gewicht.

Derartige Gassack-Module sind beispielsweise aus der WO 2015/024543 A1 und der WO 2015/024544 A1 bekannt.

Als nachteilig hat sich bei diesen aus dem Stand der Technik bekannten Gassack-Modulen jedoch herausgestellt, dass das Gehäuse eine geringe Steifigkeit aufweist, die ebenfalls materialbedingt ist. Dies führt unter anderem zu einer geringeren Eigenstabilität des Gassack-Moduls. Aufgrund der geringen Steifigkeit des Gehäuses und des Gassack-Moduls sind unter anderem die Befestigung des Gassack-Moduls an der Instrumententafel sowie die Fixierung des Gasgenerators am Gassack-Modul erschwert. Darüber hinaus ist das Gehäuse nicht formstabil, sodass eine positionsgenaue Montage nur unter enormen Aufwand erfolgen kann.

Die Aufgabe der Erfindung ist es, ein Gassack-Modul bereitzustellen, das leicht ist und eine ausreichend hohe Steifigkeit aufweist.

Die Aufgabe wird erfindungsgemäß durch ein Gassack-Modul zur Anbringung an einer Instrumententafel gelöst, mit einem Gasgenerator, einem Befestigungsabschnitt, der derart ist, dass das Gassack-Modul über den Befestigungsabschnitt an der Instrumententafel angebracht werden kann, einem Aufnahmeabschnitt für einen Gassack sowie einem Halteabschnitt, der zur Halterung des Gasgenerators dient, wobei das Gassack-Modul eine Trägerstruktur, die den Befestigungsabschnitt aufweist, und ein Gehäuse hat, das aus einem Gewebematerial besteht, und wobei der Halteabschnitt teilweise in einem Haltebereich des Gehäuses ausgebildet ist, der zum Befestigungsabschnitt entgegengesetzt ist, sodass der Gasgenerator von außen befestigt ist und sich zumindest teilweise in den Aufnahmeabschnitt erstreckt, wobei die Trägerstruktur wenigstens einen im Querschnitt U-förmigen Tragabschnitt aufweist, der das Gehäuse zumindest teilweise umgibt, und wobei die Trägerstruktur einen umlaufenden Rahmen aufweist.

Der Grundgedanke der Erfindung ist es, das Gewicht des Gassack-Moduls dadurch zu reduzieren, dass das Gehäuse aus einem Gewebematerial gebildet ist. Die Steifigkeit des Gassack-Moduls wird erhöht bzw. trotz des Gewebematerials des Gehäuses nicht vermindert, da die Trägerstruktur vorgesehen ist, die eine höhere Festigkeit bzw. Steifigkeit als das Gehäuse aufweist. Die Steifigkeit der Trägerstruktur verleiht dem gesamten Gassack-Modul eine ausreichend hohe Steifigkeit. Aufgrund der hybridartigen Ausbildung des Gassack-Moduls können die Vorteile der jeweiligen Materialien genutzt werden, also das geringe Gewicht des Gewebematerials sowie die Festigkeit und Stabilität der Trägerstruktur, die aus einem steiferen Material als das Gewebematerial ausgebildet ist. Da die Trägerstruktur zudem zur Befestigung des Gassack-Moduls an der Instrumententafel dient, ist sichergestellt, dass die Montage des Gassack-Moduls in einfacher Weise erfolgen kann. Des Weiteren ist durch die Trägerstruktur gewährleistet, dass eine positionsgenaue Befestigung des Gassack-Moduls an der Instrumententafel erfolgen kann, da die Trägerstruktur eine vordefinierte Form mit vordefinierten Abmessungen aufweist.

Der Tragabschnitt sorgt für eine höhere Steifigkeit des Gassack-Moduls und stabilisiert das Gehäuse zusätzlich. Generell dient der Tragabschnitt zur Formgebung des weniger formstabilen Gehäuses. Hierzu liegt das Gehäuse zumindest an Schenkeln sowie dem Bodenbereich des im Querschnitt U-förmigen Tragabschnitts an, sodass die Form des Gehäuses sowie dessen Stabilisierung unter anderem durch die Schenkel ermöglicht wird.

Der umlaufende Rahmen dient ebenfalls der Stabilisierung des ansonsten verhältnismäßig flexiblen Gehäuses, sodass dieses zumindest am Befestigungsabschnitt aufgrund der steiferen Trägerstruktur eine definierte Form hat.

Unter einem umlaufenden Rahmen ist ein in sich geschlossener Rahmen zu verstehen, also ein Rahmen mit einem Rand ohne Unterbrechung. Der Rahmen beschreibt demnach im mathematischen Sinne einen allgemeinen Zylinder, der vorzugsweise eine rechteckige Grundfläche hat. Die Höhe des allgemeinen Zylinders entspricht im Wesentlichen der Materialstärke. Alternativ kann der Rahmen eine umlaufende Wand bzw. einen Kragen aufweisen, die bzw. der vom umlaufenden Rahmen absteht, insbesondere senkrecht zum Rahmen.

Ein Aspekt sieht vor, dass der Halteabschnitt eine Ausnehmung im Gehäuse und ein separates Halteelement umfasst, das an einer Innenseite des Gehäuses angeordnet ist, um den Gasgenerator zu fixieren. Hierdurch ist sichergestellt, dass der Gasgenerator stabil und sicher am Gassack-Modul fixiert werden kann, auch wenn der Gasgenerator lediglich an einem Teil des weniger steifen Halteabschnitts angebracht wird. Die Stabilität wird über das separate Halteelement bereitgestellt, welches beispielsweise als Haltering ausgebildet sein kann. Alternativ kann das separate Halteelement auch topfförmig und rahmenartig ausgebildet sein, wobei sich der Gasgenerator teilweise in das Halteelement erstreckt.

Gemäß einer Ausführungsform kann die Trägerstruktur einen Halter und eine daran angeordnete Klemmschiene aufweisen, wobei wenigstens eine Gewebelage des Gehäuses im befestigten Zustand zwischen dem Halter und der Klemmschiene eingeklemmt ist. Hierdurch ist die Montage des Gehäuses an der Trägerstruktur vereinfacht, da lediglich eine Gewebelage eingeklemmt werden muss, um das Gehäuse mit der Trägerstruktur zu verbinden.

Ferner können der Halter und die Klemmschiene eine Clips-Verbindung ausbilden. Aufgrund der Clips-Verbindung ist sichergestellt, dass sich die eingeklemmte Gewebelage nicht lösen kann. Die Clips-Verbindung dient somit zur zusätzlichen Sicherung.

Beispielsweise ist der Tragabschnitt im Bereich des Haltebereichs des Gehäuses ausgebildet, sodass der Gasgenerator zusätzlich an der Trägerstruktur befestigt wird. Hierzu weist der Tragabschnitt insbesondere ein Loch auf, durch welches der Gasgenerator eingesetzt werden kann. Das Loch des Tragabschnitts fluchtet mit der Ausnehmung im Gehäuse, sodass der Gasgenerator außen am Tragabschnitt anliegt und sich durch den Tragabschnitt und das Gehäuse zumindest teilweise in den Aufnahmeabschnitt erstreckt.

Ein weiterer Aspekt sieht vor, dass das Gehäuse Öffnungen hat und die Trägerstruktur Vorsprünge aufweist, die in die Öffnungen eingreifen. Alternativ kann die Trägerstruktur Öffnungen haben, in die Vorsprünge des Gehäuses eingreifen. Im Allgemeinen kann das Gehäuse mit der Trägerstruktur über einen Formschluss gekoppelt werden. Die Montage erleichtert sich hierdurch weiter, da das Gehäuse aufgrund der Öffnungen und der Vorsprünge relativ zur Trägerstruktur eine vordefinierte Position einnehmen kann. Das Gehäuse kann in einfacher Weise in die Trägerstruktur eingehängt werden. Insbesondere kann das Gehäuse hierdurch an der Trägerstruktur vorpositioniert werden; beispielsweise wenn das Gehäuse nachträglich noch an der Trägerstruktur gesichert wird.

Ferner kann das Gehäuse mit der Trägerstruktur über eine Schweißverbindung und/oder über eine Klemmverbindung gesichert sein. Diese Verbindung stellt sicher, dass das Gehäuse mit der Trägerstruktur unlösbar bzw. zumindest schwer lösbar verbunden ist. Die Schweiß- und/oder Klemmverbindung kann insbesondere zusätzlich zum Einhängen des Gehäuses in die Trägerstruktur vorgesehen sein. Die relative Position des Gehäuses in Bezug auf die Trägerstruktur wird festgelegt, wenn das Gehäuse eingehängt wird. Anschließend kann das Gehäuse über die Schweiß- und/oder Klemmverbindung an der Trägerstruktur gesichert werden.

Insbesondere kann die Klemmverbindung wenigstens ein Klemmelement enthalten, wobei wenigstens eine Gewebelage des Gehäuses zwischen dem Klemmelement und der Trägerstruktur geklemmt ist, um das Gehäuse an der Trägerstruktur zu sichern. Hierdurch kann nachträglich eine Klemmverbindung bereitgestellt werden, obwohl die Trägerstruktur selbst keine Klemmschiene aufweist. Generell kann über das Klemmelement eine zusätzliche Sicherung ausgebildet werden.

Gemäß einem Aspekt kann ein Gassack vorgesehen sein, der mit dem Gehäuse stoffschlüssig und/oder formschlüssig verbunden ist. Der Gassack weist somit eine vordefinierte Lage im Aufnahmeabschnitt auf, wodurch ein gewünschtes Aufblasverhalten des Gassacks sichergestellt ist. Insbesondere kann der Gassack einstückig mit dem Gehäuse ausgebildet sein, indem beispielsweise das Gehäuse durch eine äußere Lage des Gassacks gebildet ist. Dies erleichtert die Herstellung des Gassack-Moduls sowie dessen Montage, da weniger einzelne Bauteile benötigt werden.

Alternativ kann ein Gassack vorgesehen sein, der mit der Trägerstruktur stoffschlüssig und/oder formschlüssig verbunden ist, insbesondere am wenigstens einen im Querschnitt U-förmigen Tragabschnitt. Auch hierbei weist der Gassack eine vordefinierte Lage innerhalb des Aufnahmeabschnitts auf, da das Gehäuse eine vordefinierte Position in Bezug zur Trägerstruktur hat. Das gewünschte Aufblasverhalten des Gassacks kann somit ebenfalls erreicht werden. Zudem ist die Herstellung des Gassack-Moduls sowie dessen Montage auch bei dieser Ausführungsform erleichtert.

Ein weiterer Aspekt sieht vor, dass das Gehäuse im Bereich des Befestigungsabschnitts mit der Trägerstruktur verbunden ist. Hierdurch ist gewährleistet, dass das Gehäuse in dem Bereich mit der Trägerstruktur verbunden ist, der die größte Stabilität aufweist. Die Formgebung des Gehäuses sowie die Aufrechterhaltung dieser Form erfolgt somit in einfacher Weise.

Gemäß einem Aspekt bildet der umlaufende Rahmen den Befestigungsabschnitt aus. Das Gassack-Modul kann derart an der Instrumententafel angebracht werden, dass die auftretenden Kräfte möglichst gleichmäßig über den geschlossen ausgebildeten Rahmen verteilt werden. Hierzu können bei einem im Wesentlichen rechteckig umlaufenden Rahmen alle vier Schenkel entsprechende Mittel auf, über die das Gassack-Modul, insbesondere die Trägerstruktur, mit der Instrumententafel verbunden werden kann. Auch ansonsten ist eine gleichmäßige Krafteinleitung in den Rahmen gewährleistet, da sämtliche Schenkel des umlaufenden bzw. geschlossen ausgebildeten Rahmens strukturell miteinander verbunden sind, insbesondere einstückig.

Der wenigstens eine U-förmige Tragabschnitt Tist mit dem umlaufenden Rahmen einstückig ausgebildet. Die gesamte Trägerstruktur lässt sich somit einstückig ausbilden, wodurch sich deren Herstellung besonders einfach gestaltet. Bei der Trägerstruktur kann es sich um ein Spritzgussteil handeln, das beispielsweise aus einem Kunststoff besteht.

Die Trägerstruktur ist vorzugsweise derart hergestellt, dass die Wandungen der Trägerstruktur, also des Rahmens und des Tragabschnitts, Rippen aufweisen. Die Rippen stellen die benötigte Steifigkeit sicher, wobei gleichzeitig Material eingespart werden kann. Die Rippengestalt der Trägerstruktur sorgt für ein optimales Steifigkeit/Gewichts-Verhältnis.

Ein weiterer Aspekt sieht vor, dass ein Kragen vom umlaufenden Rahmen senkrecht absteht, insbesondere in entgegengesetzte Richtung zum wenigstens einen U-förmigen Tragabschnitt. Der Kragen dient unter anderem zur Formgebung des Gehäuses und optional zu dessen Befestigung. Darüber hinaus ist es hierdurch möglich, den Befestigungsabschnitt an der Trägerstruktur leicht zurückgesetzt im Vergleich zum vorstehenden Kragen auszubilden. Alternativ formuliert steht der umlaufende Rahmen seitlich vom unteren Ende des Kragens ab.

Es kann auch eine umlaufende Wand vorgesehen sein, die ebenfalls kragenförmig ausgebildet ist und sich in Richtung zum wenigstens einen U-förmigen Tragabschnitt erstreckt. Auch die umlaufende Wand dient zur Stabilisierung und Formgebung des Gehäuses.

Die Trägerstruktur, insbesondere der wenigstens eine U-förmige Tragabschnitt, kann zumindest teilweise den Halteabschnitt ausbilden. Am U-förmigen Tragabschnitt lässt sich der Gasgenerator befestigen, wodurch dieser aufgrund der Eigenstabilität der Trägerstruktur sicher und positionsgetreu gehalten ist.

Darüber hinaus kann der U-förmige Tragabschnitt als einzige Befestigung für den Gassack dienen, insbesondere wenn der U-förmige Tragabschnitt mit dem Halteelement zusammenwirkt.

Gemäß einer Ausführungsform weist die Trägerstruktur zwei im Querschnitt U-förmige Tragabschnitte auf, die das Gehäuse zumindest teilweise umgeben. Diese Ausführungsform eignet sich für rohrförmige bzw. zylindrische Gasgeneratoren, die eine gewisse längliche Ausdehnung haben. Der Gasgenerator kann dann über seine Länge an zwei Stellen, nämlich den beiden Tragabschnitten, mit der Trägerstruktur gekoppelt sein. Der Gasgenerator ist so drehfest an der Trägerstruktur befestigt.

Generell ist es möglich, dass der Gassack mit einer zusätzlichen Schutzumhüllung versehen ist. Die Schutzumhüllung kann lediglich den Gassack oder das den Gassack aufnehmende Gehäuse umschließen.

Ungeachtet dessen kann der gefaltete Gassack als ein, insbesondere thermofixiertes, Paket ausgebildet sein.

Ferner betrifft die Erfindung eine Baugruppe, die aus einer Instrumententafel und einem Gassack-Modul der zuvor genannten Art besteht. Aufgrund der Ausbildung des Gassack-Moduls mit den zuvor genannten Eigenschaften ist sichergestellt, dass eine einfach herzustellende und zu montierende Baugruppe bereitgestellt werden kann.

Gemäß einem Aspekt kann vorgesehen sein, dass die Instrumententafel Halteelemente aufweist, in die das Gassack-Modul eingeschoben und befestigt werden kann. Hierbei kann insbesondere ein Bajonettverschluss vorgesehen sein, über den das Gassack-Modul sich mit der Instrumententafel verbunden ist. Dies vereinfacht die Montage des Gassack-Moduls nochmals.

Weitere Vorteile und Eigenschaften ergeben sich aus der nachfolgenden Beschreibung und den Zeichnungen, auf die Bezug genommen wird. In den Zeichnungen zeigen:
- Figur 1 eine Explosionsansicht eines Gassack-Moduls,
- Figur 2 eine Perspektivansicht des Gassack-Moduls aus Figur 1,
- Figur 3 eine Perspektivansicht der Unterseite des Gassack-Moduls gemäß den Figuren 1 und 2,
- Figur 4 eine Draufsicht auf die Oberseite des Gassack-Moduls gemäß der Figuren 1 bis 3,
- Figur 5 eine Seitenansicht des Gassack-Moduls gemäß der Figuren 1 bis 4,
- Figur 6 eine Perspektivansicht eines Gassack-Moduls,
- Figur 7 eine Draufsicht auf die Oberseite des Gassack-Moduls gemäß der Figur 6,
- Figur 8 eine Seitenansicht des Gassack-Moduls gemäß der Figuren 6 und 7,
- Figur 9 eine Perspektivansicht eines erfindungsgemäßen Gassack-Moduls,
- Figur 10 eine Draufsicht auf die Oberseite des erfindungsgemäßen Gassack-Moduls gemäß der Figur 9,
- Figur 11 eine Seitenansicht des erfindungsgemäßen Gassack-Moduls gemäß der Figuren 9 und 10,
- Figur 12 eine weitere Seitenansicht des erfindungsgemäßen Gassack-Moduls gemäß der Figuren 9 bis 11,
- Figur 13 eine Perspektivansicht eines Gassack-Moduls,
- Figur 14 eine Draufsicht auf die Oberseite des Gassack-Moduls gemäß Figur 13,
- Figur 15 eine Seitenansicht des Gassack-Moduls gemäß der Figuren 13 und 14,
- Figur 16 eine weitere Seitenansicht des Gassack-Moduls gemäß der Figuren 13 bis 15,
- Figur 17 eine perspektivische Darstellung eines erfindungsgemäßen Gassack-Moduls,
- Figur 18 eine Draufsicht auf die Oberseite des Gassack-Moduls gemäß Figur 17,
- Figur 19 eine Seitenansicht des Gassack-Moduls gemäß der Figuren 17 und 18,
- Figur 20 eine weitere Seitenansicht des Gassack-Moduls gemäß der Figuren 17 bis 19,
- Figur 21 eine Perspektivansicht eines erfindungsgemäßen Gassack-Moduls gemäß einer anderen Ausführungsform im nichtzusammengebauten Zustand,
- Figur 22 die Perspektivansicht des erfindungsgemäßen Gassack-Moduls der Figur 21 im zusammengebauten Zustand,
- Figur 23 eine Draufsicht auf die Oberseite des erfindungsgemäßen Gassack-Moduls gemäß Figur 22,
- Figur 24 eine Seitenansicht des erfindungsgemäßen Gassack-Moduls gemäß der Figuren 22 und 23,
- Figur 25 eine weitere Seitenansicht des erfindungsgemäßen Gassack-Moduls gemäß der Figuren 22 bis 24,
- Figur 26 eine Schnittdarstellung eines erfindungsgemäßen Gassack-Moduls gemäß einer weiteren Ausführungsform,
- Figur 27 eine Draufsicht auf einen Halter des erfindungsgemäßen Gassack-Moduls gemäß Figur 26,
- Figur 28 eine Schnittdarstellung des Halters gemäß Figur 27 im geöffneten Zustand,
- Figur 29 den Halter aus Figur 27 im geschlossenen Zustand mit eingeklemmter Gewebelage,
- Figur 30 eine erfindungsgemäße Baugruppe,
- Figur 31 eine Perspektivansicht eines erfindungsgemäßen Gassack-Moduls gemäß einer weiteren Ausführungsform im nichtzusammengebauten Zustand,
- Figur 32 eine weitere Perspektivansicht des Gassack-Moduls gemäß Figur 31,
- Figur 33 eine Schnittansicht des Gassack-Moduls gemäß der Figuren 31 und 32,
- Figur 34 eine weitere Schnittansicht des Gassack-Moduls gemäß der Figuren 31 bis 33,
- Figur 35 eine Ansicht von unten auf das Gassack-Modul gemäß der Figuren 31 bis 34,
- Figur 36 eine Explosionsansicht eines erfindungsgemäßen Gassack-Moduls gemäß einer anderen Ausführungsform,
- Figur 37 eine weitere Perspektivansicht des Gassack-Moduls gemäß Figur 36,
- Figur 38 eine weitere Perspektivansicht des Gassack-Moduls gemäß der Figuren 36 und 37,
- Figur 39 eine Schnittansicht des Gassack-Moduls gemäß der Figuren 36 bis 38,
- Figur 40 eine weitere Schnittansicht des Gassack-Moduls gemäß der Figuren 36 bis 39,
- Figur 41 eine Seitenansicht des Gassack-Moduls gemäß der Figuren 36 bis 40,
- Figur 42 eine Perspektivansicht des zusammengebauten Gassack-Moduls der Figuren 36 bis 41,
- Figur 43 eine Perspektivansicht einer Trägerstruktur für ein erfindungsgemäßes Gassack-Modul gemäß einer weiteren Ausführungsform,
- Figur 44 eine Ansicht von unten auf die Trägerstruktur gemäß Figur 43,
- Figur 45 eine Draufsicht auf die Trägerstruktur gemäß der Figuren 43 und 44,
- Figur 46 eine Seitenansicht der Trägerstruktur gemäß der Figuren 43 bis 45,
- Figur 47 eine weitere Seitenansicht der Trägerstruktur gemäß der Figuren 43 bis 46,
- Figur 48 eine weitere Seitenansicht der Trägerstruktur gemäß der Figuren 43 bis 47.
- Figur 49 eine Perspektivansicht der Trägerstruktur gemäß der Figuren 43 bis 48 mit eingesetztem Gasgenerator,
- Figur 50 eine weitere Perspektivansicht der Trägerstruktur gemäß der Figuren 43 bis 48 mit eingesetztem Gasgenerator, und
- Figur 51 eine Perspektivansicht einer Trägerstruktur gemäß einer weiteren Ausführungsform mit eingesetztem Gasgenerator.

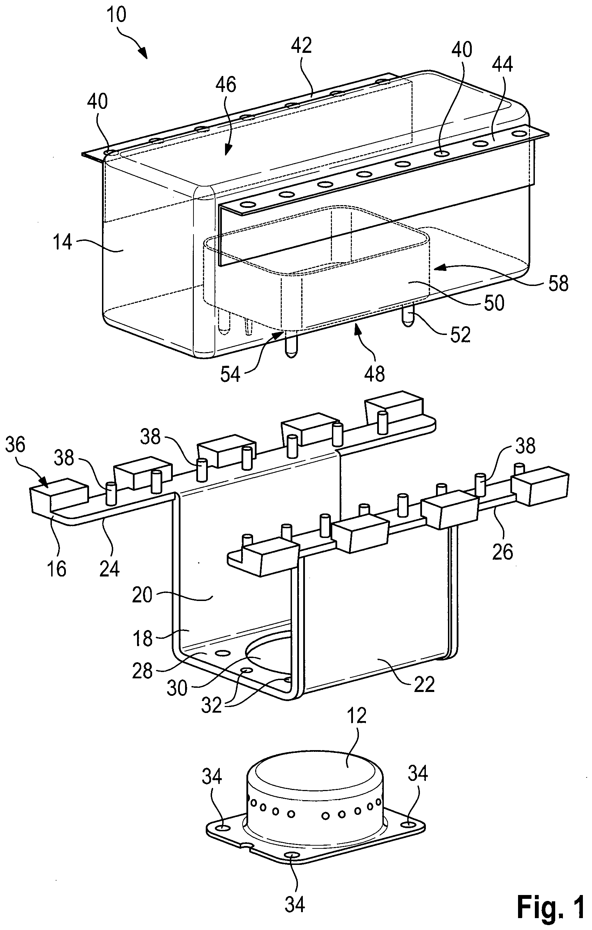

In den Figuren 1 bis 5 ist ein erstes Gassack-Modul 10 gezeigt. In Figur 1 ist das Gassack-Modul 10 in einer Explosionsansicht gezeigt, auf die zunächst Bezug genommen wird.

Das Gassack-Modul 10 weist einen Gasgenerator 12, ein Gehäuse 14 aus einem Gewebematerial sowie eine Trägerstruktur 16 auf. Die Trägerstruktur 16 kann aus einem Kunststoff, einem Leichtmetall oder einem anderen Material hergestellt sein, dass eine höhere Steifigkeit bzw. Festigkeit als das Gewebematerial des Gehäuses 14 aufweist.

Die Trägerstruktur 16 hat einen Tragabschnitt 18, der im Querschnitt U-förmig ausgebildet ist und mit seinen beiden freien Schenkeln 20, 22 in jeweils eine Leiste 24, 26 der Trägerstruktur 16 übergeht. Die Leisten 24, 26 sind demnach einstückig mit den beiden Schenkeln 20, 22 ausgebildet.

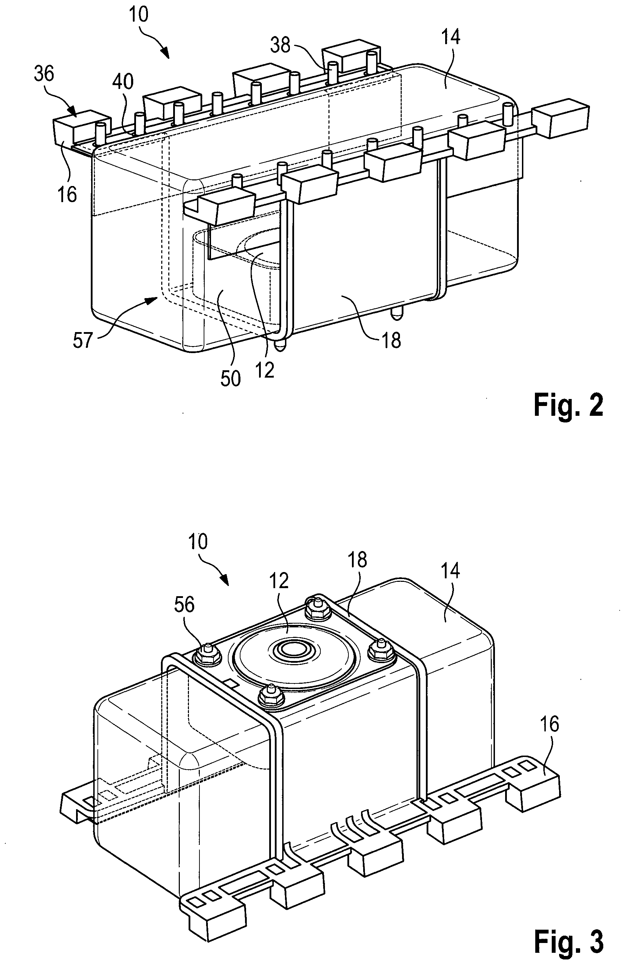

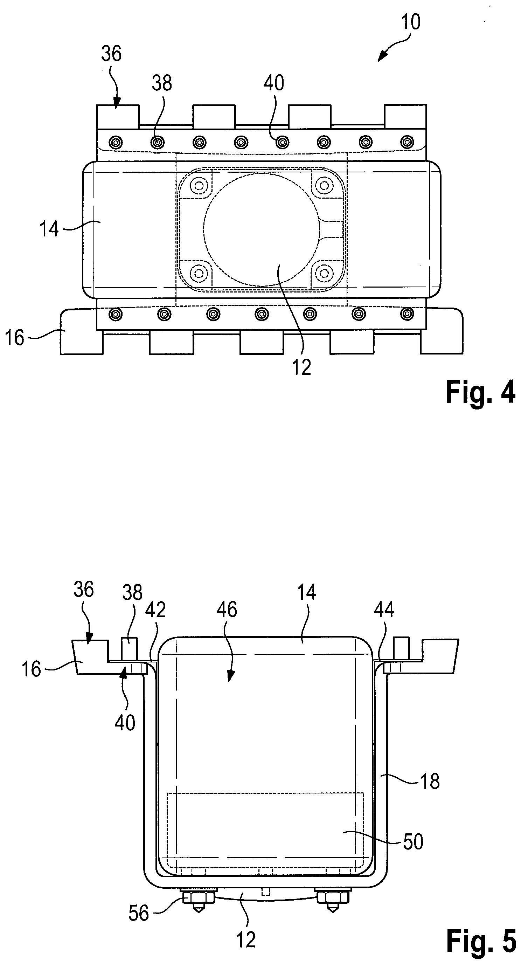

Ferner weist der Tragabschnitt 18 einen Bodenbereich 28 auf, in dem ein Loch 30 vorgesehen ist, das mittig im Bodenbereich 28 ausgebildet ist. Über das Loch 30 kann der Gasgenerator 12 durch den Tragabschnitt 18 und somit durch die Trägerstruktur 16 eingesetzt werden (siehe insbesondere Figuren 3 und 5).

Im Bodenbereich 28 sind ferner Befestigungsöffnungen 32 vorgesehen, die mit Fixierungsöffnungen 34 am Gasgenerator 12 fluchten, wenn sich der Gasgenerator 12 teilweise durch das Loch 30 erstreckt, wie nachfolgend noch erläutert wird.

Die Trägerstruktur 16 weist ferner einen Befestigungsabschnitt 36 auf, der durch die beiden Leisten 24, 26 ausgebildet ist. Der Befestigungsabschnitt 36 ist auf der zum Loch 30 entgegengesetzten Seite der Trägerstruktur 16 ausgebildet, das heißt, dass der Befestigungsabschnitt 36 auf der Seite der Trägerstruktur 16 vorgesehen ist, die vom Gasgenerator 12 wegweist. Über den Befestigungsabschnitt 36 kann das Gassack-Modul 10 an einer hier nicht dargestellten Instrumententafel angebracht werden.

An den Leisten 24, 26 sind ferner Vorsprünge 38 vorgesehen, die im zusammengebauten Zustand des Gassack-Moduls 10 in Öffnungen 40 eingreifen, welche am Gehäuse 14 ausgebildet sind (siehe insbesondere Figuren 2 und 5). Die Öffnungen 40 sind jeweils an zwei seitlich abstehenden Einhängeleisten 42, 44 des Gehäuses 14 ausgebildet. Über die Öffnungen 40 kann das Gehäuse 14 in die Trägerstruktur 16 eingehängt werden. Hierdurch kann eine vordefinierte Positionierung, insbesondere Vorpositionierung, des Gehäuses 14 in Bezug zur Trägerstruktur 16 vorgenommen werden.

Die Einhängeleisten 42, 44 können alternativ separat vom Gehäuse 14 ausgebildet sein. Beispielsweise können die Einhängeleisten 42, 44 winklig sein, wobei sie mit einem ersten Schenkel am Gehäuse 14 befestigt sind und der zweite Schenkel die Öffnungen 40 aufweist. Der am Gehäuse 14 befestigte Schenkel kann an einer Innen- oder einer Außenseite des Gehäuses 14 befestigt sein. Die separat ausgebildeten Einhängeleisten 42, 44 können aus einer Gewebelage des Gewebematerials des Gehäuses 14 bestehen. Alternativ kann es sich auch um ein anderes Gewebematerial oder ein anderes Material handeln.

Die Einhängeleisten 42, 44 sind jeweils separat und im Wesentlichen L-förmig ausgebildet (siehe insbesondere Figur 5), wobei sie mit dem längeren Schenkel am Gehäuse 14 befestigt sind und der kürzere Schenkel die Öffnungen 40 aufweist.

Aus den Figuren 2 und 5 geht zudem hervor, dass das Gehäuse 14 mit wenigstens einer Gewebelage an der Trägerstruktur 16 eingehängt ist.

Ferner weist das Gehäuse 14 einen Aufnahmeabschnitt 46 auf, der zur Aufnahme eines hier nicht dargestellten Gassacks dient. Der Aufnahmeabschnitt 46 wird durch die Seitenwände des Gehäuses 14 begrenzt und von dem durch die Seitenwände begrenzten Raum ausgebildet.

Das Gehäuse 14 hat zudem eine Ausnehmung 48, die mit dem Loch 30 im Tragabschnitt 18 fluchtet, wenn das Gehäuse 14 in die Trägerstruktur 16 eingehängt ist (siehe insbesondere Figuren 2 bis 5).

Ferner ist ein separates Halteelement 50 gezeigt, das im Aufnahmeabschnitt 46 angeordnet und der Ausnehmung 48 zugeordnet ist. Das Halteelement 50 ist topfförmig ausgebildet, wobei es zudem rahmenförmig ist, sodass es weder Deckel noch Boden hat. Dies ergibt sich unter anderem aus Figur 4, in der das Gassack-Modul 10 im zusammengebauten Zustand in einer Draufsicht gezeigt ist. Der Gasgenerator 12 erstreckt sich dabei von außerhalb und unten bis in das topfförmige Halteelement 50 und ist in der Draufsicht zu sehen.

Das Halteelement 50 weist zudem Befestigungselemente 52 auf, die sich im zusammengebauten Zustand des Gassack-Moduls 10 durch Aufnahmeöffnungen 54 im Boden des Gehäuses 14, den Befestigungsöffnungen 32 der Trägerstruktur 16 sowie den Fixierungsöffnungen 34 des Gasgenerators 12 erstrecken (siehe insbesondere die Figuren 3 bis 5). Die Fixierung erfolgt anschließend durch entsprechende Gegenmittel 56, sodass das Gehäuse 14 an der Trägerstruktur 16 sowie der Gasgenerator 12 an der Trägerstruktur 16, insbesondere dem Tragabschnitt 18, und dem Halteelement 50 fixiert sind. Bei den Befestigungselementen 52 und den Gegenmitteln 56 kann es sich insbesondere um eine Schrauben-Mutter-Verbindung handeln.

Das Gassack-Modul 10 weist allgemein einen Halteabschnitt 57 auf, der zur Halterung des Gasgenerators 12 im zusammengebauten Zustand dient (siehe Figur 2). Der Halteabschnitt 57 wird unter anderem durch einen Haltebereich 58 des Gehäuses 14 ausgebildet. Der Haltebereich 58 ist im Wesentlichen durch die Ausnehmung 48 im Gehäuse 14 gebildet. Im zusammengebauten Zustand ist der Haltebereich 58 zum Befestigungsabschnitt 36 entgegengesetzt.

Der Halteabschnitt 57 wird zusätzlich durch den Bodenbereich 28 des Tragabschnitts 18 und das Halteelement 50 gebildet, die die benötigte Steifigkeit zur Fixierung des Gasgenerators 12 bereitstellen.

Der Gasgenerator 12 wird demnach von außen am Gehäuse 14 und der Trägerstruktur 16 angebracht, wobei er sich bis in den Aufnahmeabschnitt 46 erstreckt, der innen vorgesehen ist. Dies ist möglich, da der Haltebereich 58 entsprechende Aussparungen aufweist, insbesondere das Loch 30 und die Ausnehmung 48.

Nachdem das Gehäuse 14 in die Trägerstruktur 16 eingehängt ist (siehe Figur 2), kann das Gehäuse 14 zusätzlich mittels einer Schweißverbindung an der Trägerstruktur 16 gesichert werden.

Der hier nicht dargestellte Gassack, der im Aufnahmeabschnitt 46 angeordnet ist, kann mit dem Gehäuse 14 stoffschlüssig und/oder formschlüssig verbunden sein. Insbesondere kann das Gehäuse 14 durch eine äußere Lage des Gassacks ausgebildet sein, sodass sich die Herstellung und Montage entsprechend vereinfacht.

Alternativ kann der Gassack mit der Trägerstruktur 16 stoffschlüssig und/oder formschlüssig verbunden sein, sodass er eine definierte Lage in Bezug auf die Trägerstruktur 16 hat. Da das Gehäuse 14 ebenfalls eine vordefinierte Position zur Trägerstruktur 16 hat, insbesondere aufgrund der Öffnungen 40 und der Vorsprünge 38, ist sichergestellt, dass der Gassack eine vordefinierte Lage innerhalb des Aufnahmeabschnitts 46 einnimmt. Hierdurch ist das gewünschte Aufblasverhalten des Gassacks sichergestellt.

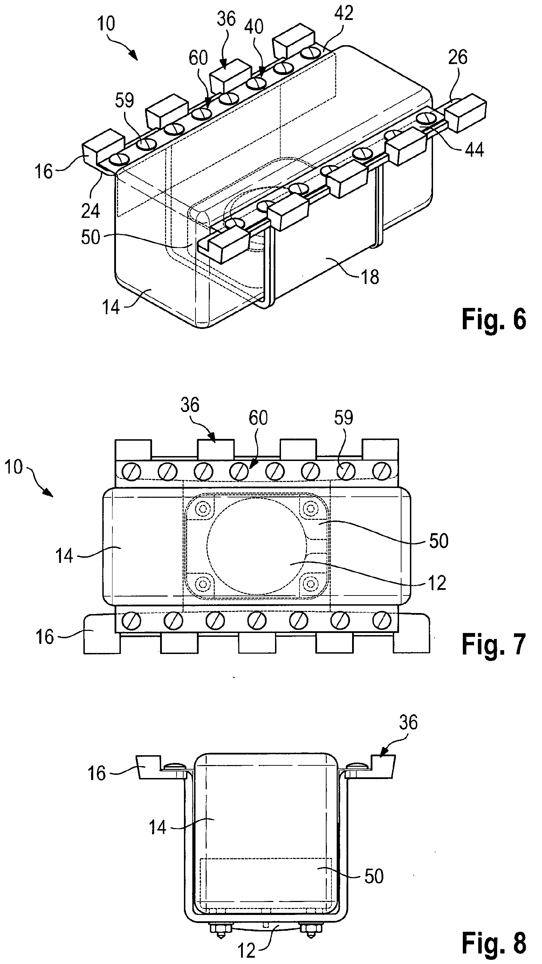

In den Figuren 6 bis 8 ist ein anderes Gassack-Modul 10 dargestellt. Im Folgenden wird lediglich auf die Unterschiede eingegangen.

Das Gehäuse 14 ist an der Trägerstruktur 16 über zusätzliche Steckelemente 59 befestigt, die sich durch die Öffnungen 40 im Gehäuse 14 erstrecken. Ferner wirken die Steckelemente 59 mit Stecköffnungen 60 der Trägerstruktur 16 zusammen, die anstelle der Vorsprünge 38 in den Leisten 24, 26 vorgesehen sind.

Bei den Steckelementen 59 kann es sich beispielsweise um Nietelemente handeln, sodass eine dauerhafte Verbindung der Trägerstruktur 16 mit dem Gehäuse 14 sichergestellt ist.

Das in den Figuren 6 bis 8 dargestellte Gassack-Modul 10 unterscheidet sich demnach von demjenigen der Figuren 1 bis 5 in der Anbindungsart bzw. Art der Koppelung des Gehäuses 14 mit der Trägerstruktur 16.

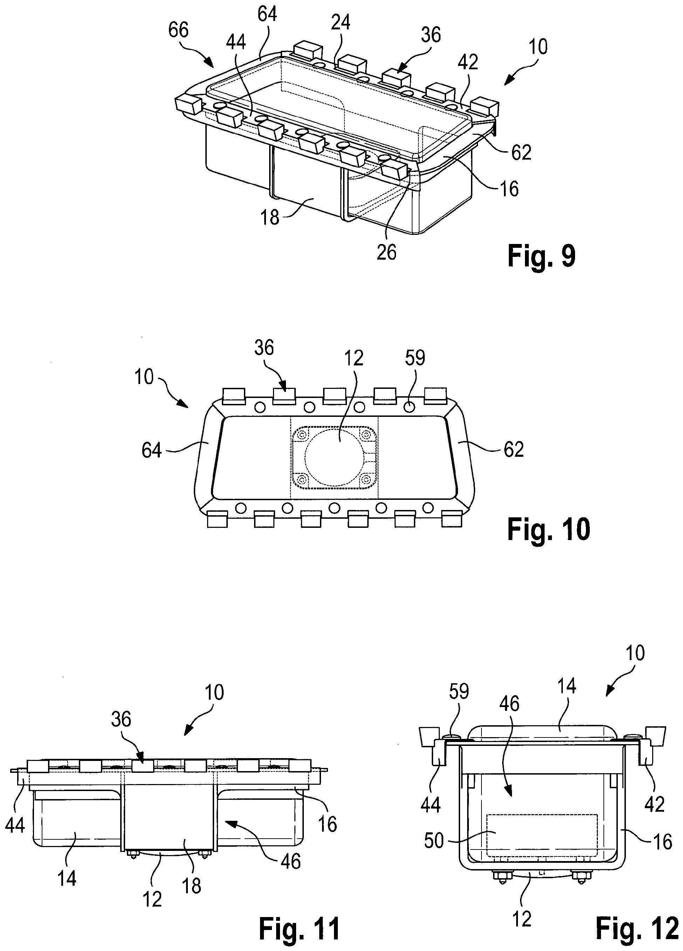

In den Figuren 9 bis 12 ist eine Ausführungsform des Gassack-Moduls 10 dargestellt, die sich gegenüber dem zuvor beschriebenen Gassack-Modul dahingehend unterscheidet, dass die beiden Leisten 24, 26 der Trägerstruktur 16 über Querschenkel 62, 64 verbunden sind, sodass ein umlaufender Rahmen 66 ausgebildet ist.

Der umlaufende Rahmen 66 unterstützt die Formgebung des Gehäuses 14, das aufgrund seines Gewebematerials leichter formbar ist. Darüber hinaus verleiht der umlaufende Rahmen 66 dem Gassack-Modul 10 eine größere Steifigkeit.

Der Befestigungsabschnitt 36 wird lediglich durch die beiden Leisten 24, 26 gebildet, sodass dieser demjenigen der vorherigen Ausführungsformen entspricht.

Der Befestigungsabschnitt 36 ist demnach im Bereich des umlaufenden Rahmens 66 vorgesehen. Im selben Bereich ist auch das Gehäuse 14 mit der Trägerstruktur 16 gekoppelt, die den umlaufenden Rahmen 66 aufweist.

Der im Querschnitt U-förmige Tragabschnitt 18 erstreckt sich nur über eine Teillänge des umlaufenden Rahmens 66.Aus den Figuren 9 und 10 geht hervor, dass sich das Gehäuse 14 nicht über die Querschenkel 62, 64 erstreckt, sondern lediglich über die beiden Leisten 24, 26, da die Einhängeleisten 42, 44 mit den beiden Leisten 24, 26 zusammenwirken. Dennoch liegt das Gehäuse 14 an den Querschenkeln 62, 64 an.

Alternativ kann das Gehäuse 14 derart ausgebildet sein, dass es sich auch über die Querschenkel 62, 64 erstreckt, also über den gesamten Rahmen 66.

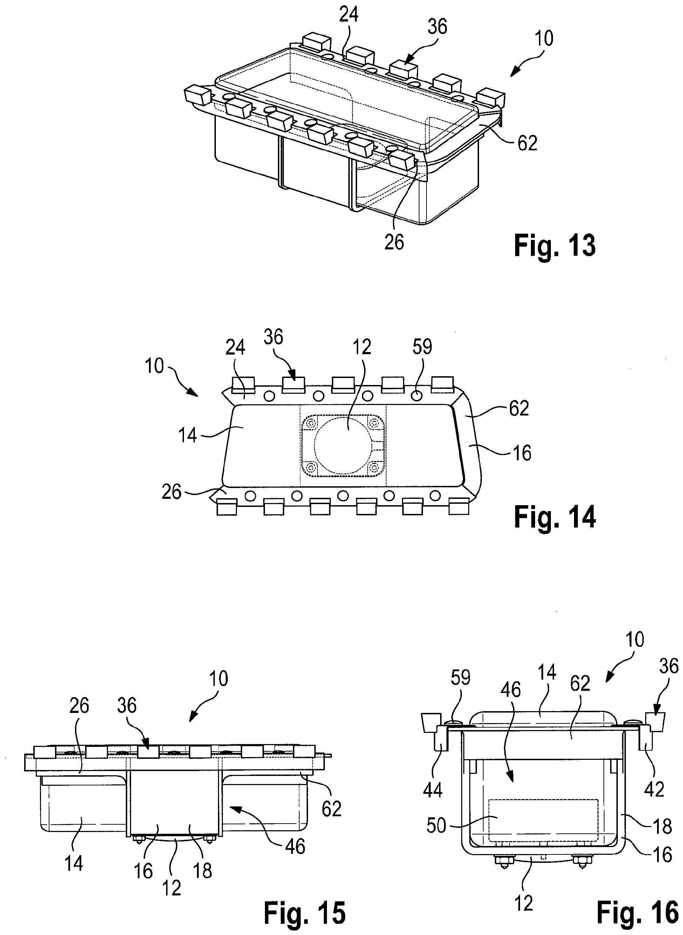

In den Figuren 13 bis 16 ist ein anderes Gassack-Modul 10 gezeigt, welches sich von dem zuvor beschrieben Gassack-Modul, das in den Figuren 9 bis 12 gezeigt ist, lediglich dahingehend unterscheidet, dass nur der erste Querschenkel 62 vorgesehen ist.

Die beiden Leisten 24, 26 sowie der erste Querschenkel 62 bilden einen in Draufsicht U-förmigen Teilrahmen der Trägerstruktur 16 aus.

Der Befestigungsabschnitt 36 wird auch hier lediglich über die beiden Leisten 24, 26 gebildet.

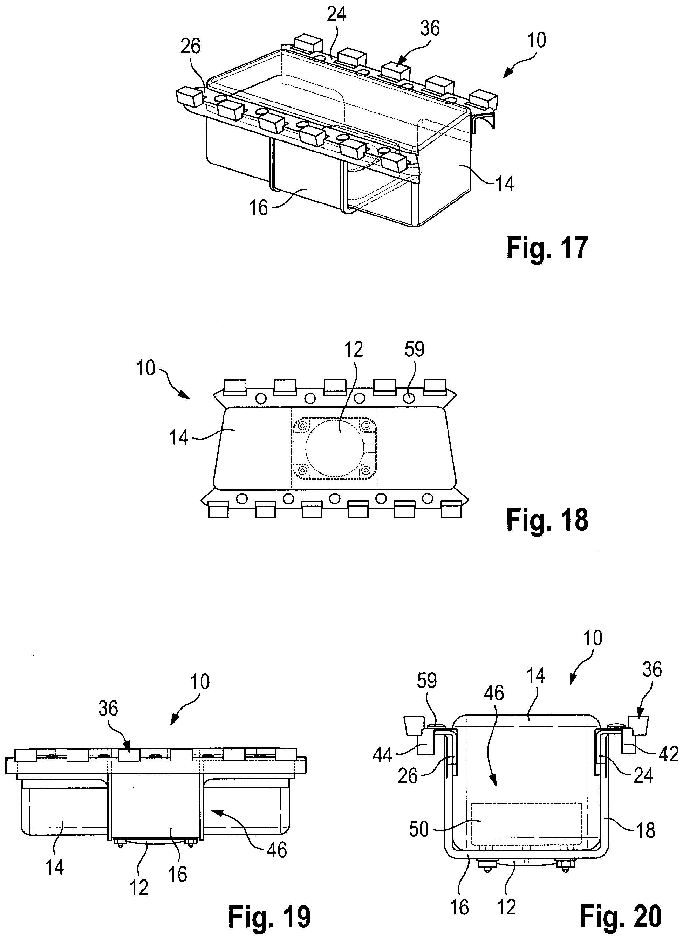

In den Figuren 17 bis 20 ist ein weiteres Gassack-Modul 10 gezeigt. Dieses Gassack-Modul 10 unterscheidet sich von dem Gassack-Modul, das in den Figuren 6 bis 8 gezeigt ist, dahingehend, dass die beiden Leisten 24, 26 an ihren jeweiligen Enden gekrümmt sind. Dies geht insbesondere aus den Figuren 17, 18 und 20 hervor.

Die Leisten 24, 26 weisen an ihren jeweiligen Enden eine auf das ihr gegenüberliegende Ende der anderen Leiste gerichtete Krümmung auf. Hierdurch wird die Formgebung des Gehäuses 14 unterstützt.

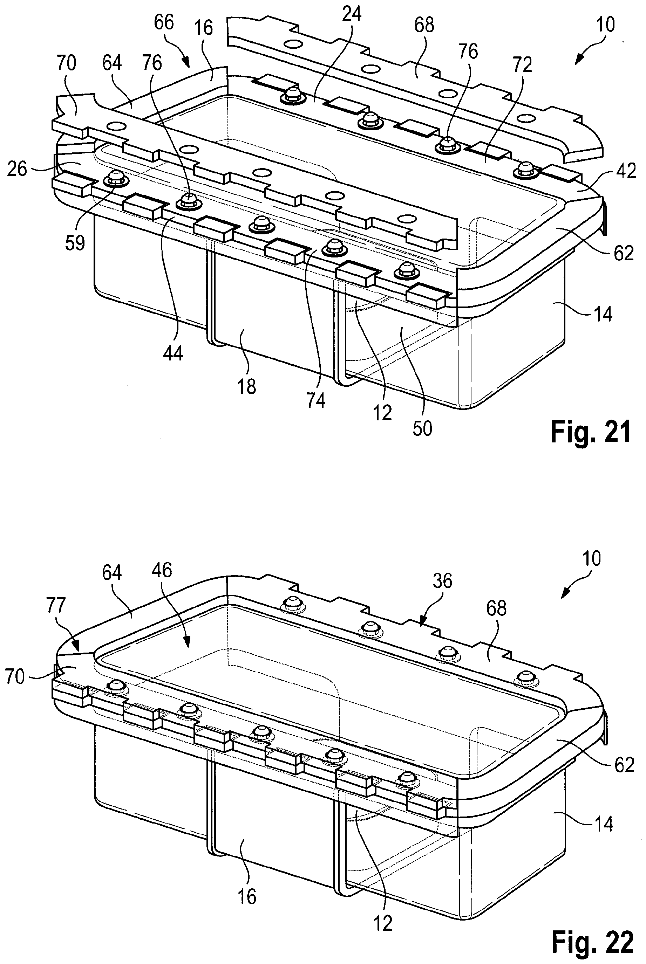

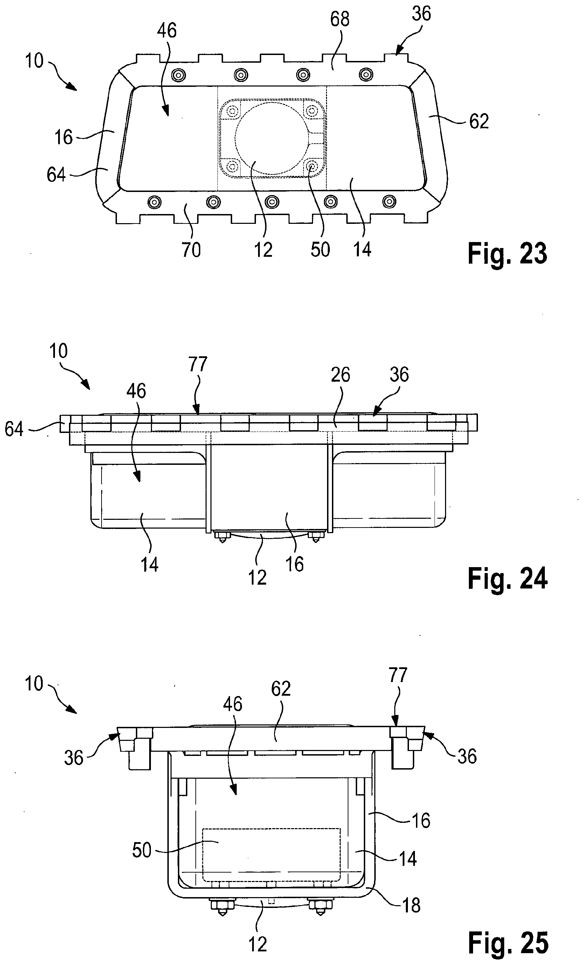

In den Figuren 21 bis 25 ist eine weitere Ausführungsform des Gassack-Moduls 10 gezeigt, die im Wesentlichen der Ausführungsform des Gassack-Moduls 10 gemäß der Figuren 9 bis 12 entspricht, da die beiden Leisten 24, 26 und die beiden Querschenkel 62, 64 vorgesehen sind, sodass die Trägerstruktur 16 den umlaufenden Rahmen 66 aufweist.

Diese Ausführungsform des Gassack-Moduls 10 unterscheidet sich von der zuvor beschriebenen Ausführungsform dahingehend, dass zusätzlich zwei Klemmelemente 68, 70 vorgesehen sind, die mit den beiden Leisten 24, 26 eine Klemmverbindung ausbilden, wobei wenigstens eine Gewebelage des Gehäuses 14 zwischen den Klemmelementen 68, 70 und den beiden Leisten 24, 26 eingeklemmt wird.

Bei der wenigstens einen Gewebelage des Gehäuses 14 kann es sich insbesondere um diejenige der separat ausgebildeten Einhängeleisten 42, 44 handeln.

Die beiden Leisten 24, 26 sowie die beiden Querschenkel 62, 64 bilden, wie bereits erwähnt, den umlaufenden Rahmen 66 aus, wobei die beiden Leisten 24, 26 zusätzlich als Klemmleisten 72, 74 dienen, da sie mit den Klemmelementen 68, 70 zusammenwirken. Die Klemmelemente 68, 70 bilden mit den Klemmleisten 72, 74 somit eine Klemmverbindung aus.

Ferner sind die Steckelemente 59 in der gezeigten Ausführungsform durch Clips-Elemente ausgebildet, die durch die Stecköffnungen in den Leisten 24, 26 und die Öffnungen 40 des Gehäuses 14 gesteckt worden sind. Die Steckelemente 59 sind von der Unterseite der Trägerstruktur 16 eingeführt worden, sodass sie mit ihren aktiven Clips-Endabschnitten 76 den Klemmelementen 68, 70 gegenüberliegen, die aufgesetzt werden können. Die Klemmverbindung ist daher zusätzlich als Clips-Verbindung ausgebildet, über die das Gehäuse 14 zusätzlich an der Trägerstruktur 16 gesichert ist. Dies ist in Figur 22 gezeigt.

Generell kann die Clips-Verbindung so ausgebildet sein, dass sie nicht mehr oder nur mit einem Werkzeug lösbar ist.

Die beiden Querschenkel 62, 64 sind ferner gegenüber der zuvor beschriebenen Ausführungsform höher ausgebildet, sodass sie mit den aufgesetzten Klemmelementen 68, 70 eine im Wesentlichen ebene Oberfläche 77 ausbilden. Gleichzeitig weisen die Klemmelemente 68, 70 ebenfalls Elemente für den Befestigungsabschnitt 36 auf, über den das Gassack-Modul 10 an einer Instrumententafel angebracht werden kann.

Generell weisen die Klemmelemente 68, 70 eine im Wesentlichen gleich Kontur wie die Leisten 24, 26 auf, sodass sie bündig auf diese aufgesetzt werden können. Die den Befestigungsabschnitt 36 ausbildende Elemente der Klemmelemente 68, 70 liegen entsprechend bündig auf den den Befestigungsabschnitt 36 ausbildenden Elementen der der Leisten 24, 26.

Diese Ausführungsform unterscheidet sich demnach in der Anbindung des Gehäuses 14 an die Trägerstruktur 16 von der zuvor beschriebenen Ausführungsform.

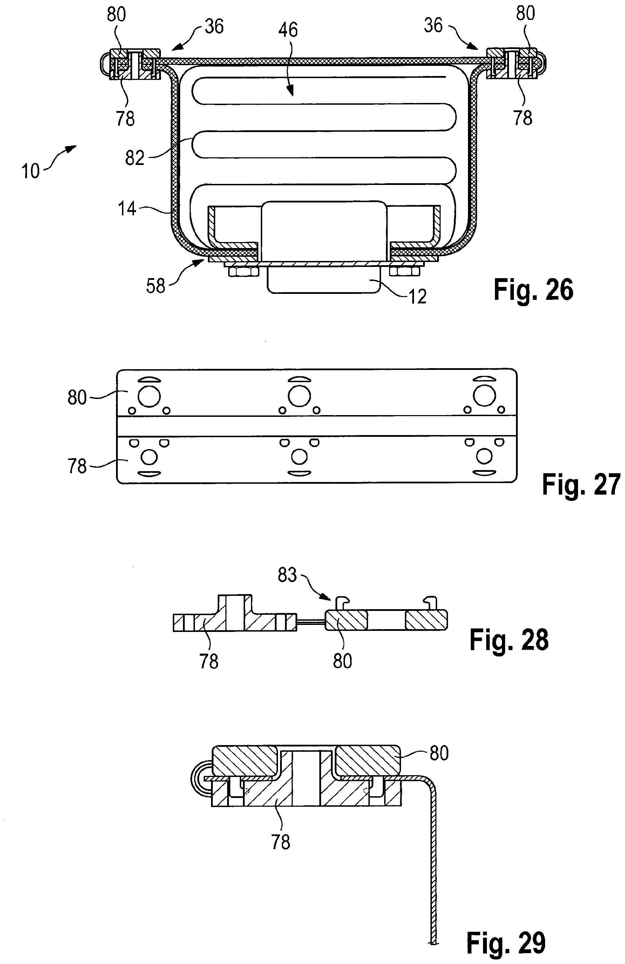

In der Figur 26 ist eine weitere Ausführungsform des Gassack-Moduls 10 gezeigt, bei der das Gassack-Modul 10 geschnitten dargestellt ist.

In dieser Ausführungsform weist die Trägerstruktur 16 zwei Halter 78 mit jeweils daran angeordneter Klemmschiene 80 auf, die über einen scharnierartigen Bereich umgeklappt werden können (siehe Figur 27). Dies wird nachfolgend anhand der Figuren 28 und 29 erläutert.

An den beiden Haltern 78 mit den daran angeordneten Klemmschienen 80 kann der Befestigungsabschnitt 36 ausgebildet sein, über den das Gassack-Modul 10 an der Instrumententafel befestigt werden kann.

Der im Querschnitt U-förmige Tragabschnitt 18 geht in die Halter 78 über, was aus Gründen der besseren Darstellbarkeit in Figur 26 nur im unteren Haltebereich 58 des Gehäuses 14 angedeutet ist, wohingegen dies in den Figuren 27 bis 29 nicht dargestellt ist.

Die Trägerstruktur 16 kann einen umlaufenden Rahmen 66 aufweisen, dessen Befestigungsabschnitt 36 zumindest durch die beiden Halter 78 gebildet ist, insbesondere zusätzlich durch die beiden hier nicht dargestellten Querschenkel 62, 64.

Demnach kann der gesamte Rahmen 66 den Befestigungsabschnitt 36 ausbilden.

Die in Figur 26 gezeigte Ausführungsform unterscheidet sich von derjenigen der Figuren 21 bis 25 dahingehend, dass die Klemmverbindung durch in Figur 27 näher gezeigten Halter 78 mit jeweils daran angeordneter Klemmschiene 80 ausgebildet sind, sodass die Klemmschienen 80 verliersicher angeordnet sind. Ferner ist in Figur 26 ein Gassack 82 gezeigt, der im Aufnahmeabschnitt 46 des Gassack-Moduls 10 aufgenommen ist.

Aus den Figuren 28 und 29, die einen der beiden Halter 78 mit der daran angeordneten Klemmschiene 80 im geschnittenen Zustand zeigen, wird deutlich, dass der Halter 78 und die Klemmschiene 80 zusätzlich eine Clips-Verbindung 83 ausbilden, da entsprechende Rastelemente und Öffnungen vorgesehen sind.

Im geschlossenen Zustand (siehe Figur 29) ist wenigstens eine Gewebelage des Gehäuses 14 zwischen dem Halter 78 und der Klemmschiene 80 im geklemmt, wodurch das Gehäuse 14 an der Trägerstruktur 16 zusätzlich gesichert sein kann.

Bei dieser wenigstens einen Gewebelage kann es sich um diejenige der Einhängeleisten 42, 44 handeln, die am Gehäuse 14 befestigt sind.

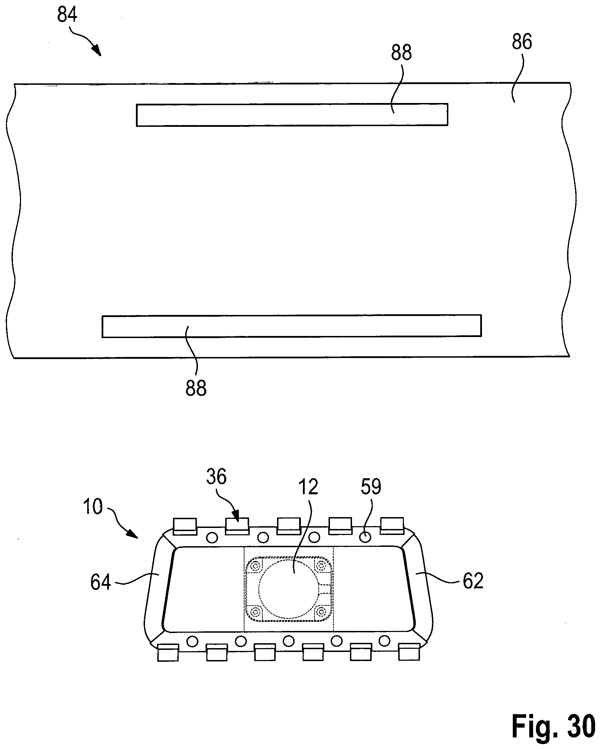

In Figur 30 ist eine Baugruppe 84 gezeigt, die ein Gassack-Modul 10 und eine Instrumententafel 86 umfasst, welche nur bereichsweise dargestellt ist.

An der Instrumententafel 86 sind Fixierelemente 88 vorgesehen, über die das Gassack-Modul 10 an der Instrumententafel 86 befestigt werden kann. Hierzu kann das Gassack-Modul 10 über seinen Befestigungsabschnitt 36 in die Fixierelemente 88 eingeschoben und anschließend befestigt werden. Die Befestigung kann insbesondere über einen Bajonettverschluss bereitgestellt werden, wodurch eine zusätzliche Sicherung erfolgt.

In der gezeigten Ausführungsform ist das Gassack-Modul 10 gemäß der in den Figuren 9 bis 12 dargestellten Ausführungsform gezeigt. Selbstverständlich können alle weiteren Ausführungsformen des Gassack-Moduls 10 ebenfalls an der Instrumententafel 86 befestigt werden.

Hierdurch können universal verwendbare Fixierelemente 88 an der Instrumententafel 86 vorgesehen sein, die es ermöglichen, eine Vielzahl von verschiedenen Gassack-Module 10 an der Instrumententafel 86 zu fixieren.

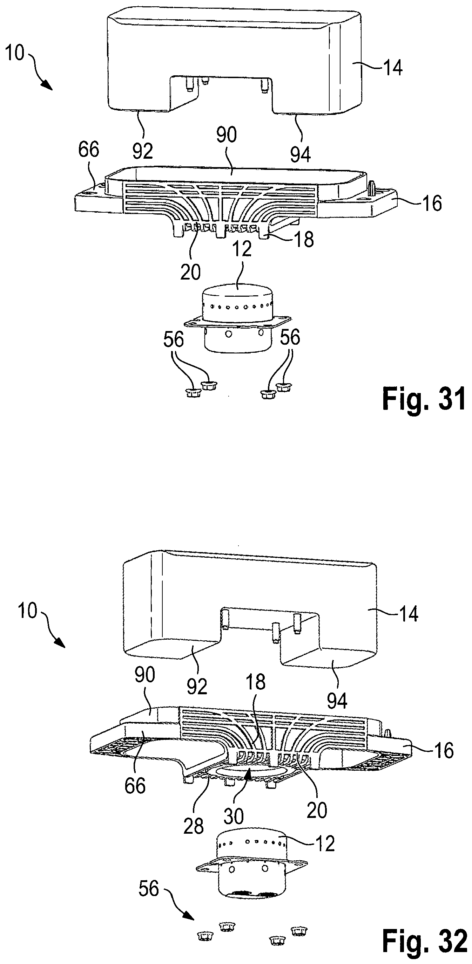

In den Figuren 31 bis 35 ist eine weitere Ausführungsform des erfindungsgemäßen Gassack-Moduls 10 gezeigt.

Das Gassack-Modul 10 umfasst den Gasgenerator 12, das Gehäuse 14 sowie die Trägerstruktur 16, die den im Querschnitt U-förmigen Tragabschnitt 18 aufweist, der in der gezeigten Ausführungsform mittig an der Trägerstruktur 16 ausgebildet ist.

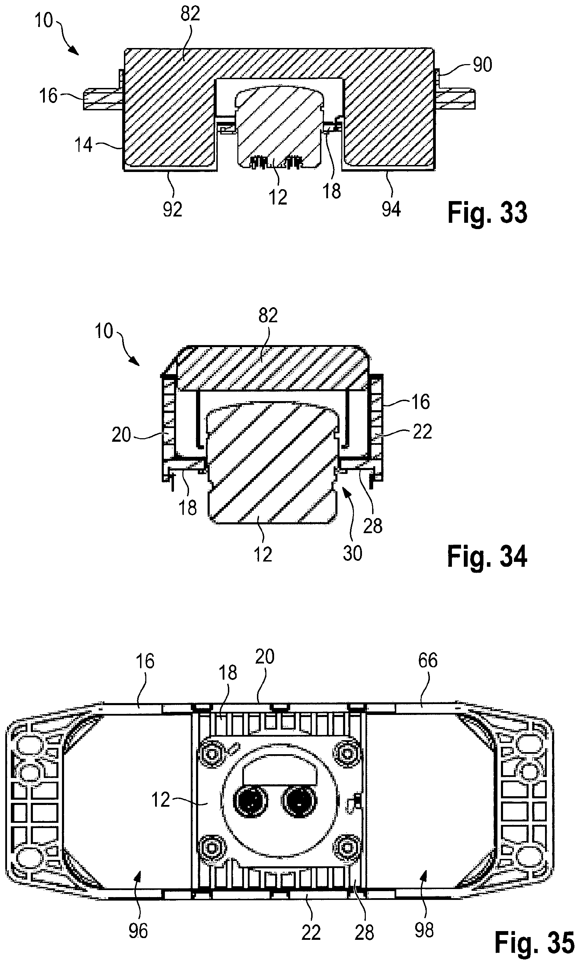

Im Gehäuse 14 ist der Gassack 82 im gefalteten Zustand angeordnet, wie aus den Figuren 33 und 34 hervorgeht, in denen der Gassack 82 aus Gründen der besseren Darstellbarkeit als kompaktes Element dargestellt ist,

Die beiden Schenkel 20, 22 des U-förmigen Tragabschnitts 18 gehen in den umlaufenden Rahmen 66 der Trägerstruktur 16 über. Der Tragabschnitt 18 weist zudem in analoger Weise zu den vorherigen Gassack-Modulen 10 einen Bodenbereich 28 mit einer zentralen Loch 30 auf, durch das sich der Gasgenerator 12 erstreckt.

Ferner sind in den gezeigten Figuren die Gegenmittel 56 gezeigt, welche zur Fixierung des Gasgenerators 12 am Halteelement 50 dienen, welches in den gezeigten Figuren bereits im Gehäuse 14 angeordnet ist. Lediglich die Befestigungselemente 52 des Halteelements 50 ragen aus dem Gehäuse 14 raus, wie bereits zuvor beschrieben worden ist.

Die Trägerstruktur 16 weist neben dem umlaufenden Rahmen 66 einen davon abstehenden Kragen 90 auf, der im Wesentlichen senkrecht vom umlaufenden Rahmen 66 absteht, insbesondere vom Tragabschnitt 18 wegweisend.

Des Weiteren ist dargestellt, dass die Trägerstruktur 16 Rippen aufweist, insbesondere im Bereich des Tragabschnitts 18. Generell tragen die Rippen dazu bei, dass die Trägerstruktur 16 eine hohe Steifigkeit bei geringem Gewicht hat.

Die in den Figuren 31 bis 35 dargestellte Ausführungsform entspricht im Wesentlichen der in den Figuren 9 bis 12 gezeigten Ausführungsform.

Das Gehäuse 14 wird in analoger Weise an der Trägerstruktur 16 im Bereich des Befestigungsabschnitts 36 angeordnet, was in den gezeigten Figuren aufgrund der besseren Übersichtlichkeit nicht dargestellt ist.

Hinsichtlich der Befestigungsmethoden sowie den unterschiedlichen Möglichkeiten das Gehäuse 14 mit der Trägerstruktur 16 zu koppenln und zu sichern wird auf die bereits genannten und zuvor beschriebenen Möglichkeiten verwiesen.

Es geht insbesondere aus der Figur 33 hervor, dass der Gasgenerator 12 derart im Gassack-Modul 10 angeordnet ist, dass der Gasgenerator 12 nicht den untersten Bereich des Gassack-Moduls 10 darstellt.

Das Gehäuse 14 ist demnach derart ausgebildet, dass es zwei Fußabschnitte 92, 94 aufweist, die sich durch entsprechende Öffnungen 96, 98 der Trägerstruktur 16 erstrecken (siehe Figur 35), die jeweils seitlich vom U-förmigen Tragabschnitt 18 vorgesehen sind.

Die beiden Fußabschnitte 92, 94 weisen dabei eine derartige Länge auf, dass sie über den Gasgenerator 12 ragen, wenn dieser an der Trägerstruktur 16 befestigt ist (siehe Figur 33).

Die Trägerstruktur 16 ist aufgrund der rippenartigen Gestaltung sowie dem umlaufenden Rahmen 66 derart ausgebildet, dass es eine ausreichende Steifigkeit des Gassack-Moduls 10 sicherstellt und gleichzeitig gewichtsoptimiert ist, sodass insgesamt ein sehr leichtes und eigenstabiles Gassack-Modul 10 geschaffen ist.

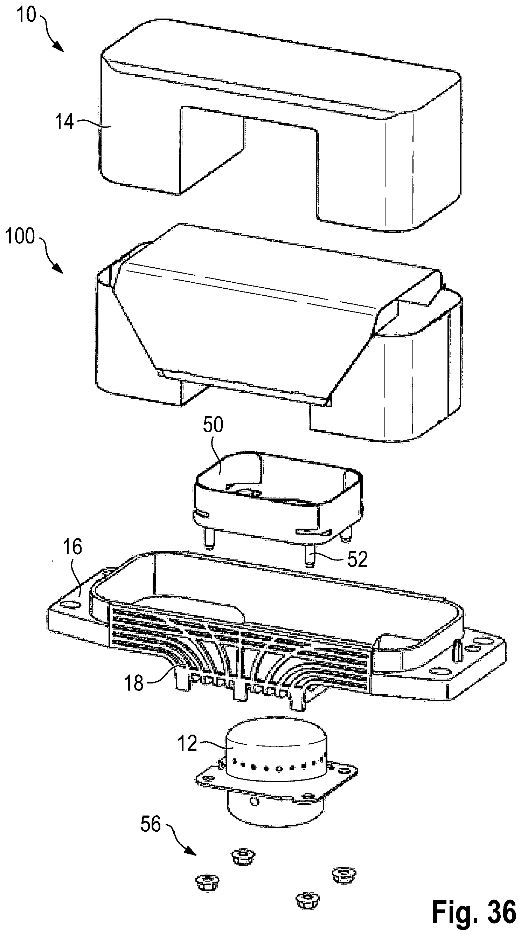

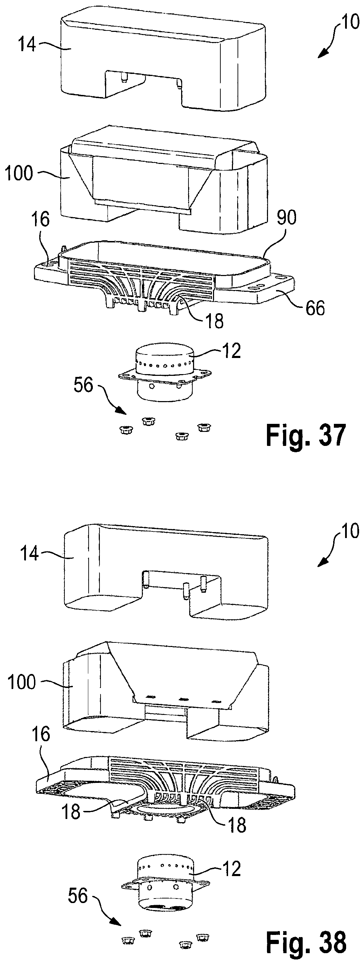

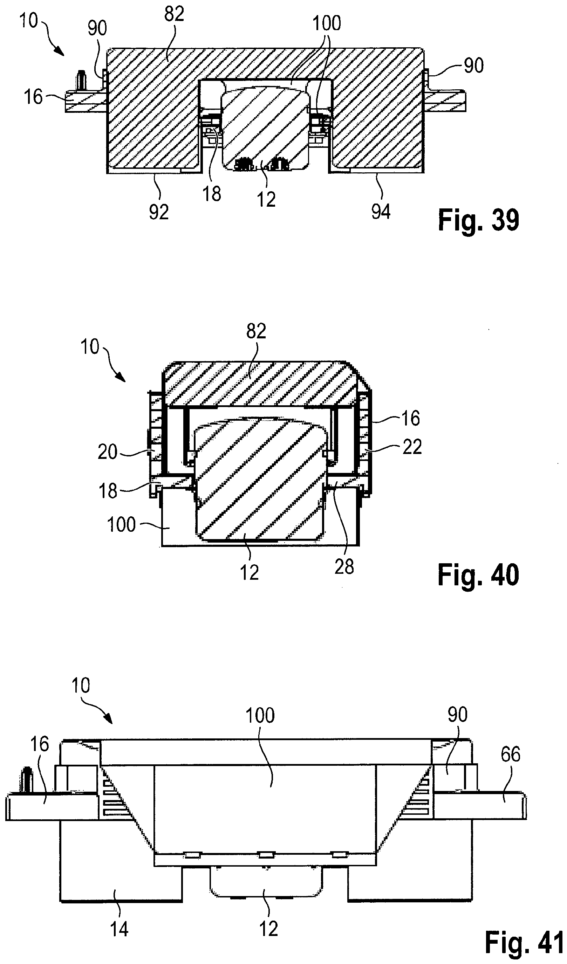

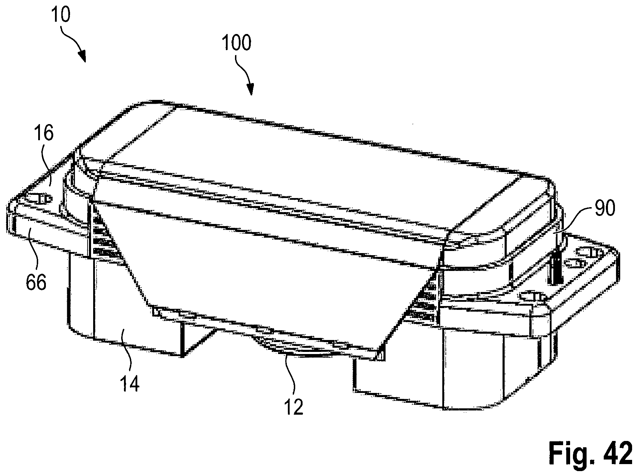

In den Figuren 36 bis 42 ist eine weitere Ausführungsform des erfindungsgemäßen Gassack-Moduls 10 in verschiedenen Ansichten gezeigt.

Diese Ausführungsform unterscheidet sich von der zuvor beschriebenen Ausführungsform darin, dass zusätzlich eine Schutzumhüllung 100 für den Gassack 82 vorgesehen ist.

Zudem ist das Halteelement 50 in Figur 36 separat, also außerhalb des Gehäuses 14, dargestellt.

Das Gehäuse 14 wird dabei in die Schutzumhüllung 100 eingesetzt. Alternativ kann vorgesehen sein, dass die Schutzumhüllung 100 lediglich den Gassack 82 umschließt, der zusammen mit der Schutzumhüllung 100 im Gehäuse 14 angeordnet ist, sodass die Schutzumhüllung 100 zunächst in das Gehäuse 14 eingesetzt wird, bevor der Gassack 82 in das Gehäuse 14 eingebracht wird.

Generell kann es sich bei dem Gassack 82 um ein thermofixiertes Paket handeln, wenn sich dieser im gefalteten Zustand befindet.

Im Allgemeinen ist vorgesehen, dass der Gassack 82 lediglich am im Querschnitt U-förmigen Tragabschnitt 18 der Trägerstruktur 16 befestigt ist, wobei dies über das Halteelement 50 sichergestellt wird.

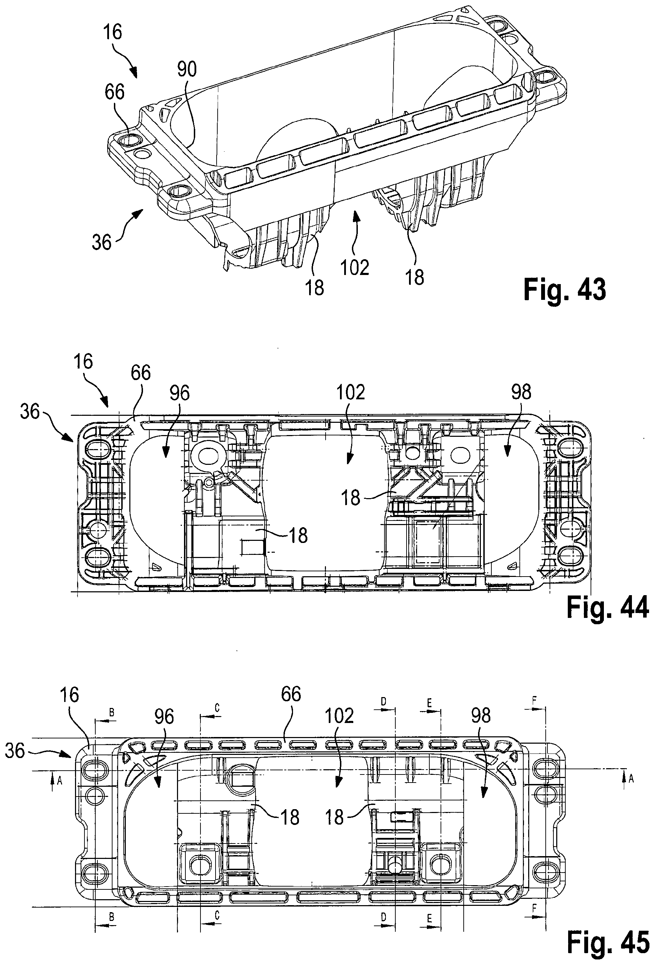

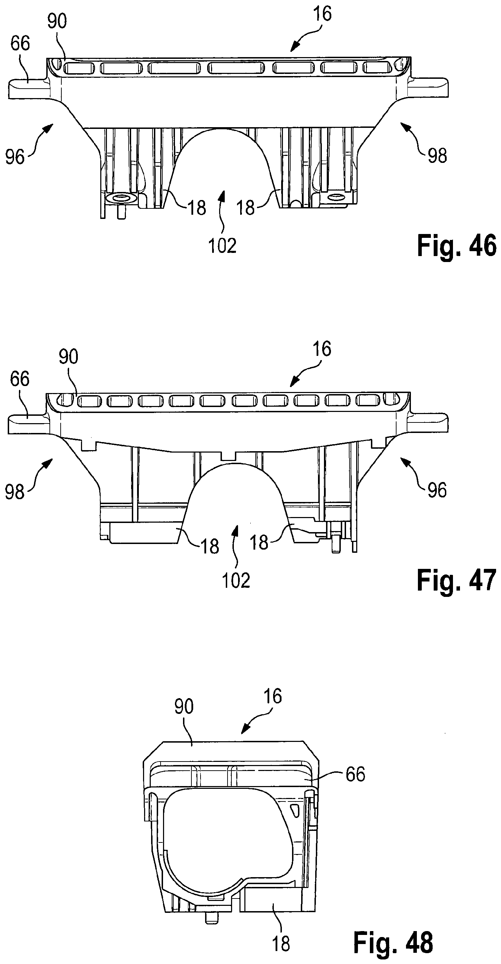

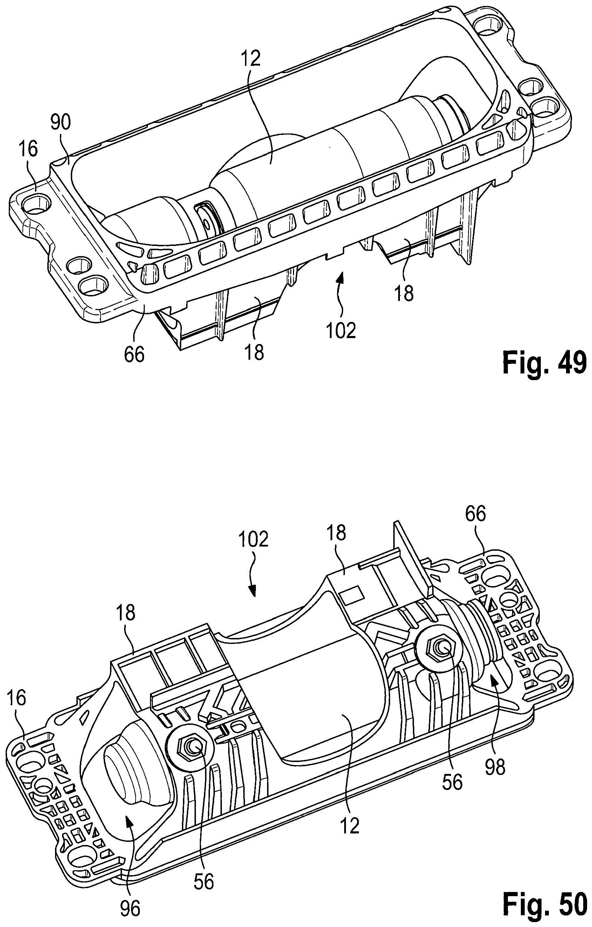

In den Figuren 43 bis 50 ist eine weitere Ausführungsform des Gassack-Moduls 10 gezeigt, wobei in den Figuren 43 bis 48 lediglich die Trägerstruktur 16 des Gassack-Moduls 10 und in den Figuren 49 und 50 die Trägerstruktur 16 mit Gasgenerator 12 dargestellt sind.

Die Trägerstruktur 16 zeichnet sich dadurch aus, dass sie den umlaufenden Rahmen 66 aufweist, von dem zwei im Querschnitt U-förmige Tragabschnitte 18 in zum Befestigungsabschnitt 36 entgegengesetzte Richtung abstehen.

Die beiden im Querschnitt U-förmigen Tragabschnitte 18 dienen in analoger Weise zu den vorher beschriebenen Ausführungsformen dazu, den Gasgenerator 12, der in diesen Figuren 43 bis 48 nicht dargestellt ist, an der Trägerstruktur 16 zu befestigen.

Die Trägerstruktur 16 und somit das dementsprechend ausgebildete Gassack-Modul 10 eignet sich insbesondere für Gasgeneratoren 12, die länglich bzw. rohrförmig ausgebildet sind, sodass sie an mehr als einer Anbindungsstelle mit der Trägerstruktur 16 verbunden werden sollte.

Dementsprechend weist der Halteabschnitt 57 dieser Trägerstruktur 16 zwei Anbindungsbereiche auf, über die der Gasgenerator 12 verdrehsicher an der Trägerstruktur 16 befestigt werden kann.

Wie insbesondere aus den Figuren 44 und 45 hervorgeht, weist die Trägerstruktur 16 ansonsten lediglich den umlaufenden Rahmen 66 auf, von dem sich der Kragen 90 senkrecht nach oben erstreckt. Zwischen den beiden im Querschnitt U-förmigen Tragabschnitten 18 ist eine Aussparung 102 vorgesehen, wohingegen zwischen einem Tragabschnitt 18 und dem entsprechend gegenüberliegenden Abschnitt des Rahmens 66 die Öffnung 96, 98 vorgesehen ist. Hierdurch kann die Trägerstruktur 16 entsprechend leicht ausgebildet werden.

Der Gasgenerator 12 kann in dieser Ausführungsform entweder durch die Öffnung, die vom umlaufenden Rahmen 66 umschlossen wird oder einer seitlichen Öffnung der Trägerstruktur 16 eingeschoben und dann befestigt werden.

Der Halteabschnitt 57 wird in dieser Ausführungsform allein von der Trägerstruktur 16 bereitgestellt, insbesondere vom wenigstens einen Tragabschnitt 18 bzw. den beiden vorgesehenen Tragabschnitten 18.

Der Gasgenerator 12 wird in analoger Weise zu den vorherigen Ausführungsformen von außen befestigt, da die Gegenmittel 56 ebenfalls an der Außenseite der U-förmigen Tragabschnitte 18 angeordnet sind (siehe insbesondere Figur 50).

Das Gehäuse 14 ist in den gezeigten Figuren aus Gründen der Übersichtlichkeit nicht dargestellt. Es wird jedoch in analoger Weise zu den vorher beschriebenen Ausführungsformen an der Trägerstruktur 16 befestigt, insbesondere im Bereich des Befestigungsabschnitts 36, der durch den umlaufenden Rahmen 66 gebildet ist.

Die Gassack-Module 10 der vorherigen Ausführungsformen weisen alle einen Tragabschnitt 18 auf, der sich nur über eine Teillänge des Rahmens 66 erstreckt, sodass Öffnungen 96, 98 neben dem Tragabschnitt 18 vorgesehen sind. Ein solch ausgebildeter Tragabschnitt 18 kann auch als Bügel bezeichnet werden.

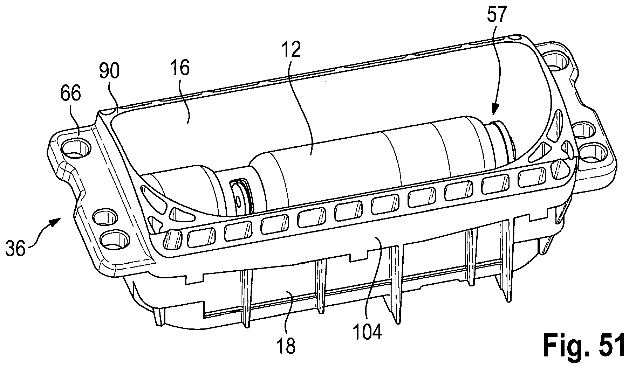

In der Figur 51 ist eine weitere Ausführungsform des erfindungsgemäßen Gassack-Moduls 10 gezeigt, wobei lediglich die Trägerstruktur 16 mit dem daran angeordneten Gasgenerator 12 dargestellt ist.

In dieser Ausführungsform weist die Trägerstruktur 16 den umlaufenden Rahmen 66 auf, von dem sich ein einziger im Querschnitt U-förmiger Tragabschnitt 18 vom Befestigungsabschnitt 36 abweisend in Richtung Halteabschnitt 57 erstreckt und den Halteabschnitt 57 zumindest teilweise ausbildet.

Der Tragabschnitt 18 ist in dieser Ausführungsform wannenförmig ausgebildet, sodass er eine geschlossene Außenfläche ohne Öffnung hat.

Des Weiteren ist in dieser Ausführungsform eine umlaufende Wand 104 gezeigt, die sich ausgehend vom umlaufenden Rahmen 66 zum Halteabschnitt 57 erstreckt. Diese umlaufende Wand 104 dient zur weiteren Erhöhung der Eigenstabilität des Gassack-Moduls 10.

Die umlaufende Wand 104 kann auch bei den anderen Ausführungsformen vorgesehen sein, insbesondere bei denjenigen, die einen bügelartigen Tragabschnitt 18 aufweisen. Hierbei kann die umlaufende Wand 104 zur Formgebung des Gehäuses 14 beitragen.

Sämtliche Ausführungsformen des erfindungsgemäßen Gassack-Moduls 10 zeichnen sich dadurch aus, dass sie einen umlaufenden Rahmen 66 aufweisen, der für die benötigte Stabilität im Bereich des Befestigungsabschnitts 36 sorgt, sodass das Gassack-Modul 10 über den Befestigungsabschnitt 36 an der Instrumententafel 86 befestigt werden kann.

Gleichzeitig ist sichergestellt, dass das Gassack-Modul 10 seine vorgesehene Form beibehält.

Das Gassack-Modul 10 kann dennoch leicht ausgebildet werden, da das Gehäuse 14 aus einem Gewebematerial gebildet ist, welches leichter als die Trägerstruktur 16 ist. Die Trägerstruktur 16 dient lediglich zur Stabilisierung des ansonsten flexiblen und nicht formhaltenden Gehäuses 14.

## Patentansprüche

1. Gassack-Modul (10) zur Anbringung an einer Instrumententafel (86), mit einem Gasgenerator (12), einem Befestigungsabschnitt (36), der derart eingerichtet ist, dass das Gassack-Modul 10 über den Befestigungsabschnitt (36) an der Instrumententafel (86) angebracht werden kann, einem Aufnahmeabschnitt (46) für einen Gassack (82) sowie einem Halteabschnitt (57), der zur Halterung des Gasgenerators (12) dient, wobei das Gassack-Modul (10) eine Trägerstruktur (16), die den Befestigungsabschnitt (36) aufweist, und ein Gehäuse (14) hat, das aus einem Gewebematerial besteht, und wobei der Halteabschnitt (57) teilweise in einem Haltebereich (58) des Gehäuses (14) ausgebildet ist, der zum Befestigungsabschnitt (36) entgegengesetzt ist, sodass der Gasgenerator (12) von außen befestigt ist und sich zumindest teilweise in den Aufnahmeabschnitt (46) erstreckt, wobei die Trägerstruktur (16) einen umlaufenden Rahmen (66) mit Leisten (24, 26) und damit verbundenen Querschenkeln (62, 64) aufweist, **dadurch gekennzeichnet, dass** die Trägerstruktur (16) wenigstens einen im Querschnitt U-förmigen Tragabschnitt (18) aufweist, der das Gehäuse (14) zumindest teilweise umgibt, und dass der wenigstens eine U-förmige Tragabschnitt (18) mit dem umlaufenden Rahmen (66) einstückig ausgebildet ist.

2. Gassack-Modul (10) nach Anspruch 1, **dadurch gekennzeichnet, dass** der Halteabschnitt (57) eine Ausnehmung (48) im Gehäuse (14) und ein separates Halteelement (50) umfasst, das an einer Innenseite des Gehäuses (14) angeordnet ist, um den Gasgenerator (12) zu fixieren.

3. Gassack-Modul (10) nach Anspruch 1 oder 2, **dadurch gekennzeichnet, dass** die Trägerstruktur (16) einen Halter (78) und eine daran angeordnete Klemmschiene (80) aufweist, wobei wenigstens eine Gewebelage des Gehäuses (14) im befestigten Zustand zwischen dem Halter (78) und der Klemmschiene (80) eingeklemmt ist, insbesondere wobei der Halter (78) und die Klemmschiene (80) eine Clips-Verbindung (83) ausbilden.

4. Gassack-Modul (10) nach einem der vorhergehenden Ansprüche, **dadurch gekennzeichnet, dass** ein Gassack (82) vorgesehen ist, der mit dem Gehäuse (14) stoffschlüssig und/oder formschlüssig verbunden ist.

5. Gassack-Modul (10) nach einem der Ansprüche 1 bis 3, **dadurch gekennzeichnet, dass** ein Gassack (82) vorgesehen ist, der mit der Trägerstruktur (16) stoffschlüssig und/oder formschlüssig verbunden ist, insbesondere am wenigstens einen im Querschnitt U-förmigen Tragabschnitt (18).

6. Gassack-Modul (10) nach einem der vorhergehenden Ansprüche, **dadurch gekennzeichnet, dass** das Gehäuse (14) im Bereich des Befestigungsabschnitts (36) mit der Trägerstruktur (16) verbunden ist.

7. Gassack-Modul (10) nach einem der vorhergehenden Ansprüche, **dadurch gekennzeichnet, dass** das Gehäuse (14) mit der Trägerstruktur (16) über eine Schweißverbindung und/oder über eine Klemmverbindung gesichert ist.

8. Gassack-Modul (10) nach Anspruch 7, **dadurch gekennzeichnet, dass** die Klemmverbindung wenigstens ein Klemmelement (68, 70) aufweist, wobei wenigstens eine Gewebelage des Gehäuses (14) zwischen dem Klemmelement (68, 70) und der Trägerstruktur (16) geklemmt ist, um das Gehäuse (14) an der Trägerstruktur (16) zu sichern.

9. Gassack-Modul (10) nach einem der vorhergehenden Ansprüche, **dadurch gekennzeichnet, dass** der umlaufende Rahmen (66) den Befestigungsabschnitt (36) ausbildet.

10. Gassack-Modul (10) nach einem der vorhergehenden Ansprüche, **dadurch gekennzeichnet, dass** ein Kragen vom umlaufenden Rahmen (66) senkrecht absteht, insbesondere in entgegengesetzte Richtung zum wenigstens einen U-förmigen Tragabschnitt (18).

11. Gassack-Modul (10) nach einem der vorhergehenden Ansprüche, **dadurch gekennzeichnet, dass** die Trägerstruktur (16), insbesondere der wenigstens eine U-förmige Tragabschnitt (18), zumindest teilweise den Halteabschnitt (57) ausbildet.

12. Gassack-Modul (10) nach einem der vorhergehenden Ansprüche, **dadurch gekennzeichnet, dass** die Trägerstruktur (16) zwei im Querschnitt U-förmige Tragabschnitte (18) aufweist, die das Gehäuse (14) zumindest teilweise umgeben.

13. Baugruppe (84) bestehend aus einer Instrumententafel (86) und einem Gassack-Modul (10) nach einem der vorhergehenden Ansprüche.

14. Baugruppe (84) nach Anspruch 13, **dadurch gekennzeichnet, dass** die Instrumententafel (86) Fixierelemente (88) aufweist, in die das Gassack-Modul (10) eingeschoben und befestigt ist, insbesondere über einen Bajonettverschluss.

## Claims

1. An airbag module (10) for attaching to an instrument panel (86) comprising an inflator (12), a fastening portion (36) which is arranged so that the airbag module (10) can be attached to the instrument panel (86) via the fastening portion (36), a receiving portion (46) for an airbag (82) as well as a holding portion (57) which serves for holding the inflator (12), the airbag module (10) having a support structure (16) including the fastening portion (36) and a housing (14) made from fabric material, the holding portion (57) being partially configured in a holding area (58) of the housing (14) which is opposed to the fastening portion (36) so that the inflator (12) is fastened from outside and extends at least partially into the receiving portion (46), the support structure (16) having a peripheral frame (66) including strips (24, 26) and cross-legs (62, 64) connected thereto, **characterized in that** the support structure (16) comprises at least one supporting portion (18) U-shaped in cross-section with at least partially encompasses the housing (14) and **in that** the at least one U-shaped supporting portion (18) is formed integrally with the peripheral frame (66).

2. The airbag module (10) according to claim 1, **characterized in that** the holding portion (57) comprises a recess (48) in the housing (14) and a separate holding element (50) which is arranged at an inner side of the housing (14) so as to fix the inflator (12).

3. The airbag module (10) according to claim 1 or 2, **characterized in that** the support structure (16) comprises a holder (78) and a clamping rail (80) arranged thereon, wherein at least one fabric layer of the housing (14) is clamped in the fastened state between the holder (78) and the clamping rail (80), especially wherein the holder (78) and the clamping rail (80) form a clip connection (83).

4. The airbag module (10) according to any one of the preceding claims, **characterized in that** an airbag (82) is provided which is connected to the housing (14) via an integral connection and/or positive connection.

5. The airbag module (10) according to any one of the claims 1 to 3, **characterized in that** an airbag (82) is provided which is connected to the support structure (16) via an integral connection and/or positive connection, especially to the at least one supporting portion (18) U-shaped in cross-section.

6. The airbag module (10) according to any one of the preceding claims, **characterized in that** the housing (14) is connected to the support structure (16) in the area of the fastening portion (36).

7. The airbag module (10) according to any one of the preceding claims, **characterized in that** the housing (14) is secured to the support structure (16) via a welded joint and/or via a clamping connection.

8. The airbag module (10) according to claim 7, **characterized in that** the clamping connection includes at least one clamping element (68, 70), wherein at least one fabric layer of the housing (14) is clamped between the clamping element (68, 70) and the support structure (16) so as to secure the housing (14) to the support structure (16).

9. The airbag module (10) according to any one of the preceding claims, **characterized in that** the peripheral frame (66) forms the holding portion (36).

10. The airbag module (10) according to any one of the preceding claims, **characterized in that** a collar projects perpendicularly form the peripheral frame (66), especially in the direction opposite to the at least one U-shaped supporting portion (18).

11. The airbag module (10) according to any one of the preceding claims, **characterized in that** the support structure (16), especially the at least one U-shaped supporting portion (18) at least partially forms the holding portion (57).

12. The airbag module (10) according to any one of the preceding claims, **characterized in that** the support structure (16) comprises two supporting portions (18) U-shaped in cross-section which at least partially encompass the housing (14).

13. A subassembly (84) consisting of an instrument panel (86) and an airbag module (10) according to any one of the preceding claims.

14. The subassembly (84) according to claim 13, **characterized in that** the instrument panel (86) includes fixing elements (88) in which the airbag module (10) is inserted and secured, especially via a bayonet lock.

## Revendications

1. Module airbag (10) destiné à être fixé à un tableau de bord (86), comprenant un générateur de gaz (12), une partie de fixation (36), qui est agencée de sorte que le module airbag (10) peut être fixé sur le tableau de bord (86) grâce à la partie de fixation (36), une partie de réception (46) pour un sac gonflable (82) ainsi qu'une partie de maintien (57) servant à maintenir le générateur de gaz (12), pour lequel le module airbag (10) présente une structure de support (16), qui comprend la partie de fixation (36), et un boîtier (14), qui consiste en un matériau en tissu, et pour lequel la partie de maintien (57) est partiellement formée dans une zone de maintien (58) du boîtier (14), qui est opposée à la partie de fixation (36), de sorte que le générateur de gaz (12) est fixé de l'extérieur et s'étend au moins partiellement dans la partie de réception (46), pour lequel la structure de support (16) présente un cadre périphérique (66) avec des bandes (24, 26) et des branches transversales associées (62, 64), **caractérisé en ce que** la structure de support (16) présente au moins une partie de support en forme de U (18) en coupe transversale, qui entoure au moins partiellement le boîtier (14), et **en ce que** la, au minimum une, partie de support en forme de U (18) est formé d'une seule pièce avec le cadre périphérique (66).

2. Module airbag (10) selon la revendication 1, **caractérisé en ce que** la partie de maintien (57) comprend un évidement (48) dans le boitier (14) et un élément de maintien séparé (50), qui est disposé sur un côté intérieur du boitier (14), pour fixer le générateur de gaz (12).

3. Module airbag (10) selon la revendication 1 ou 2, **caractérisé en ce que** la structure de support (16) comporte un support (78) et un rail de serrage (80), pour lequel au moins une couche de tissu du boîtier (14) est à l'état fixé entre le support (78) et le rail de serrage (80) serré, et plus particulièrement, le support (78) et le rail de serrage (80) forment une liaison par clipsage (83).

4. Module airbag (10) selon l'une des revendications précédentes, **caractérisé en ce qu'**il est prévu un sac gonflable (82), qui est relié au boîtier (14) par une liaison matière ou une liaison de forme.

5. Module airbag (10) selon l'une des revendications 1 à 3, **caractérisé en ce qu'**il est prévu un sac gonflable (82) qui est relié par une liaison matière ou de forme à la structure de support (16), en particulier à au moins une section de support en forme de U (18) en coupe transversale.

6. Module airbag (10) selon l'une des revendications précédentes, **caractérisé en ce que** le boitier (14), dans la région de la partie de fixation (36), est relié avec la structure de support (16).

7. Module airbag (10) selon l'une des revendications précédentes, **caractérisé en ce que** le boitier (14) est sécurisé avec la structure de support (16) au moyen d'une liaison par soudage et/ou une liaison par serrage,

8. Module airbag (10) selon la revendication 7, caractérisé en que, la liaison par serrage présente au moins un élément de serrage (68, 70), pour lequel au moins une couche de tissu du boitier (14) est serrée entre l'élément de serrage (68, 70) et la structure de support (16), pour sécuriser le boitier (14) à la structure de support (16).

9. Module airbag (10) selon l'une des revendications précédentes, **caractérisé en ce que** le cadre périphérique (66) forme la partie de fixation (36).

10. Module airbag (10) selon l'une des revendications précédentes, **caractérisé en ce qu'**un col du cadre périphérique (66) fait saillie verticalement, en particulier dans une direction opposée à une partie de support en forme de U (18).

11. Module airbag (10) selon l'une quelconque des revendications précédentes, **caractérisé en ce que** la structure de support (16), en particulier la au moins une partie de support en forme de U (18), forme au moins partiellement la partie de maintien (57).

12. Module airbag (10) selon l'une quelconque des revendications précédentes, **caractérisé en ce que** la structure de support (16) présente deux parties de support en forme de U (18) en coupe transversale, lesquelles entourent au moins partiellement le boîtier (14).

13. Ensemble (84) constitué d'un tableau de bord (86) et d'un module airbag (10) selon l'une des revendications précédentes.

14. Ensemble (84) selon la revendication 13, **caractérisé en ce que** du tableau de bord (86) présente des éléments de fixation (88), dans lesquels le module airbag (10) est inséré et fixé, notamment par l'intermédiaire d'une fermeture à baïonnette.
